# EUROPÄISCHE PATENTSCHRIFT

(11) **EP 3 873 687 B1**
(45) Veröffentlichungstag und Bekanntmachung des Hinweises auf die Patenterteilung: **08.04.2026**
(21) Anmeldenummer: 18801050.8
(22) Anmeldetag: 31.10.2018
(51) Int. Cl.: B21F 1/02, B21C 51/00

(54) **RICHTVORRICHTUNG FÜR EINE KABELVERARBEITUNGSMASCHINE UND VERFAHREN ZUM BETREIBEN EINES RICHTWERKS**
STRAIGHTENING DEVICE FOR A CABLE-PROCESSING MACHINE AND METHOD FOR OPERATING A STRAIGHTENING UNIT
DISPOSITIF DE REDRESSAGE DESTINÉ À UNE MACHINE DE TRAITEMENT DE CÂBLE ET PROCÉDÉ DE FONCTIONNEMENT D'UNE MACHINE DE REDRESSAGE

(43) Veröffentlichungstag der Anmeldung: 08.09.2021
(73) Patentinhaber: Schleuniger AG, 3608 Thun (CH)
(72) Erfinder: KEIL, Uwe, Hückeswagen 42499 (DE)
(74) Vertreter: PPR AG
(86) Internationale Anmeldenummer: PCT/IB2018/058545
(87) Internationale Veröffentlichungsnummer: WO 2020/089677

(56) Entgegenhaltungen:
- EP-A1- 0 459 869
- EP-A1- 2 399 856
- EP-A2- 0 739 066
- WO-A1-2021/024363
- CN-A- 108 637 133
- CN-U- 208 279 105
- DE-A1- 102006 028 102
- DE-A1- 102014 205 900
- DE-A1- 2 117 489
- JP-A- 2007 115 433
- JP-A- 2008 055 432
- JP-A- 2018 099 724
- JP-A- H0 195 833
- JP-A- H05 185 138
- JP-A- H09 225 568
- JP-A- S61 159 217
- KAESEWINKEL: "WireTrex - Straightening systems, Straightener bearing rollers, Wire Straighteners, Wire Straightening rollers", 1 May 2017 (2017-05-01), XP055562517, Retrieved from the Internet <URL:https://web.archive.org/web/20170501021339/https://www.wiretrex.com/en/produkte12.php> [retrieved on 20190227]

## Beschreibung

Die Erfindung betrifft eine Richtvorrichtung zum Begradigen einer Leitung, ein Verfahren zum Betreiben eines Richtwerks und eine Kabelverarbeitungsmaschine.

Kabelverarbeitungsmaschinen umfassen mehrere Stationen, an denen ein Kabel bzw. eine Leitung schrittweise zu einem Endprodukt verarbeitet wird. Die Leitungen werden typischerweise auf Spulen oder als Bündel der Kabelverarbeitungsmaschine bereitgestellt. Diese werden in einem ersten Schritt von der Spule bzw. vom Bündel abgerollt. Die abgerollten Leitungen sind mehr oder weniger stark gekrümmt und mit Drall versehen, wodurch weitere Verarbeitungsschritte mit der Kabelverarbeitungsmaschine erschwert werden. Um die Leitung möglichst gerade zu richten, werden diese typischerweise durch eine Richtvorrichtung gezogen. Dabei muss eine Kabelverarbeitungsmaschine unterschiedlichste Leitungen verarbeiten können.

Aus dem Stand der Technik sind unterschiedliche Vorrichtungen zum Begradigen einer Leitung bekannt. Als Leitung wird hier vorliegend eine Quasi-Endlosleitung und auch ein Leitungsabschnitt von einer Quasi-Endlosleitung verstanden, welche unterschiedliche Aufbauten haben können. Die Leitung kann ein Einzelleiter sein, aus mehreren verdrillten Litzen bestehen oder ein Vollleiter sein, welche aus Kupfer, aus einer anderen stromleitenden Legierung oder aus einem lichtleitenden Material sein können. Die Leitung kann zusätzlich eine Leitungsisolierung aufweisen.

Dabei wird von diesen Vorrichtungen verlangt, die Leitung hinreichend zu begradigen. Eine hinreichend begradigte Leitung ist daran erkennbar, dass diese nach dem Begradigen in einem vordefinierten Raum, beispielsweise in einem zylindrischen Hüllraum, einführbar und durchführbar ist und dabei die Grenzen dieses vordefinierten Raums nicht verlässt. Damit lässt sich für jede zu begradigende Leitung ein eigener vordefinierter Raum festlegen, welcher ein wesentliches Qualitätskriterium für die jeweilige begradigte Leitung bzw. für den jeweiligen Leitungstyp sowie für eine Kabelverarbeitungsmaschine darstellt.

Die EP 3 184 191 A1 offenbart ein Richtwerk mit einer oberen und einer unteren Rollenreihe. Diese beiden Rollenreihen können relativ zueinander bewegt werden, wobei deren Abstand der Rollenreihen mittels einer Messeinrichtung sensorisch überwacht werden kann. Die Messeinrichtung kann mit einer Steuereinrichtung verbunden sein. Als Sollwert für den Rollenabstand kann beispielsweise ein vorbekannter oder vorgängig gemessener Aussendurchmesser des Kabels berücksichtigt sein. Es ist vorgeschlagen, die Messeinrichtung mit einer Speichereinheit zu verbinden und die Ist-Werte und/oder die Abweichung der Ist-Werte vom Soll-Wert aufzuzeichnen. Es ist zudem vorgeschlagen, den Einstellwinkel zwischen den beiden Rollenreihen mittels entsprechender Sensoren zu überwachen. Alle Sollwerte können als mathematische Funktion oder als Tabelle in einer Steuereinrichtung hinterlegt sein. Die EP 2 399 856 A1 zeigt ebenfalls ein gattungsgemässes Richtwerk.

Nachteilig an den bekannten Vorrichtungen ist, dass mit diesen Vorrichtungen ein Begradigen der Leitungen aufwändig ist und das Einstellen des Richtwerks in der Vorrichtung unzureichend genau erfolgt. Beispielsweise kann der Abstand der Rollenreihen zueinander entlang der zu begradigenden Leitung abschnittsweise variieren, wenn die zu begradigende Leitung nicht exakt zwischen den Rollenreihen angeordnet ist. Dies führt zu einer unzureichenden Begradigung der Leitung und in weiterer Folge zu Mehraufwänden bei der weiteren Leitungsverarbeitung.

Die JP2008055432A offenbart eine Drahtverarbeitungsanlage mit diversen Verarbeitungseinrichtungen mit einem Richtwerk zum begradigen eines Drahts als eigenständige Verarbeitungseinrichtung. Die Drahtverarbeitungsanlage weist eine Messeinrichtung zum Detektieren des Drahtdurchmessers als eigenständige Verarbeitungseinrichtung auf, die im Prozess nach dem Richtwerk angeordnet ist. Die Rollen dienen zur Begradigung des Drahtes. Die Durchmesserdetektion mit dem Laser dient zur Ausschussbestimmung defekter Drähte.

Die EP0459869A1 offenbart ein Verfahren und eine Vorrichtung zum automatischen Einstellen der Position von mindestens einer Richtrolle einer Rollenrichtmaschine, um ein längliches Produkt mit Querschnittsveränderungen korrekt zu richten. Der Durchmesser des zu richtenden Produkts wird in einer Ebene senkrecht zu den Achsen der Richtrollen gemessen und in Abhängigkeit von dem so ermittelten Durchmesser wird die Positionierung mindestens einer der Richtrollen veranlasst, wobei diese Positionierung dem korrekten Richten eines länglichen Produkts entspricht, dessen Durchmesser in der Richtebene gleich dem gemessenen Durchmesser ist.

Es ist die Aufgabe der vorliegenden Erfindung, einen oder mehrere Nachteile des Standes der Technik zu beheben. Insbesondere soll eine Richtvorrichtung geschaffen werden, welche das Begradigen von elektrischen oder von optischen Leitungen, verbessert. Weiters sollen Verfahren zum Zustellen bzw. Einstellen eines Richtwerks in einer Richtvorrichtung geschaffen werden, welche das Begradigen von Leitungen, insbesondere von elektrischen oder von optischen Leitungen, verbessert. Darüber hinaus sollen Kabelverarbeitungsmaschinen geschaffen werden, mit denen ein verbessertes Begradigen einer Leitung ermöglicht wird.

Diese Aufgabe wird durch die in den unabhängigen Ansprüchen definierten Vorrichtungen und Verfahren gelöst. Vorteilhafte Weiterbildungen sind in den Figuren, der Beschreibung und insbesondere in den abhängigen Patentansprüchen dargelegt.

Eine erfindungsgemässe Richtvorrichtung zum Begradigen einer Leitung umfasst ein Richtwerk, mit einer ersten Rollenreihe und einer zweiten Rollenreihe die relativ zueinander bewegbar sind. Die Richtvorrichtung weist eine Messeinrichtung zum Bestimmen eines Leitungsdurchmessers auf.

Mit dem gemessenen Leitungsdurchmesser wird das Betreiben der ersten Rollenreihe relativ zur zweiten Rollenreihe auf die jeweilige im Richtwerk bereitgestellte Leitung abstimmbar, sodass eine übermässige Belastung der Leitung im zugestellten Zustand des Richtwerks verhindert wird. Mit der Messeinrichtung wird zumindest ein spezifischer Wert der Leitung direkt während dem Betrieb der Richtvorrichtung bestimmbar. Gleichzeitig wird dadurch in weitere Folge das Begradigen der Leitung in der Richtvorrichtung verbessert.

Eine Rollenreihe weist zumindest zwei Rollen auf. Die Rollen sind vorteilhaft auf einem gemeinsamen Träger angeordnet. Die zweite Rollenreihe ist typischerweise jene Rollenreihe, an welcher die Leitung, im Richtwerk eingeführten Zustand, aufliegt und welche direkt und unbeweglich mit dem Richtwerk verbunden ist.

Erfindungsgemäss ist die Messeinrichtung am Richtwerk angeordnet. Damit erfolgt das Bestimmen des Leitungsdurchmessers direkt am Richtwerk, wodurch ein spezifischer Wert der im Richtwerk bereitgestellte Leitung festgestellt wird. Damit lässt sich beispielsweise eine Quasi-Endlosleitung, während dem Begradigungsprozess direkt im Richtwerk sowie mehrmals an unterschiedlichen Leitungsabschnitten zumindest teilweise charakterisieren. Eine zusätzliche Messeinrichtung zum Bestimmen eines Leitungsdurchmessers abseits der Richtvorrichtungen ist unnötig.

Vorzugsweise ist die Messeinrichtung zum Bestimmen des Leitungsdurchmessers als Ultraschallsensor ausgebildet. Damit lässt sich der Leitungsdurchmesser berührungslos bestimmen.

Alternativ ist die Messeinrichtung zum Bestimmen des Leitungsdurchmessers als Lasersensor ausgebildet. Lasersensoren bestimmen den Leitungsdurchmesser der Leitungen ebenfalls berührungslos, wobei ein Lasersensor einfach in der Umgebung der Leitung angeordnet werden kann. Typischerweise weisen Lasersensoren eine hohe Langzeitstabilität auf. Diese lassen sich einfach in eine Richtvorrichtung einbauen und sind einfach justierbar.

Insbesondere ist der Lasersensor als ein Laservorhang ausgebildet. Ein Laservorhang besteht typischerweise aus mehreren Laserstrahlen, die nebeneinander angeordnet sind. Die mehreren Laserstrahlen lassen sich einfach an diversen Abschnitten im Messbereich der Leitung anordnen, wodurch ein genaues Bestimmen des Leitungsdurchmessers ermöglicht wird.

Bevorzugterweise weist die Messeinrichtung zumindest eine Messrolle und eine der zumindest einen Messrolle gegenüberliegend angeordnete Andruckrolle auf, die derart angeordnet sind, dass die Leitung zwischen der zumindest einen Messrolle und der Andruckrolle durchführbar ist. Ein Abstand zwischen der zumindest einen Messrolle und der Andruckrolle ist mit einem Messrollenantrieb zum Bewegen der zumindest einen Messrolle verstellbar. Dabei ist der Leitungsdurchmesser mithilfe des Abstands zwischen der zumindest einen Messrolle und der Andruckrolle bestimmbar. Der Messrollenantrieb ermöglicht es zudem, den Abstand zwischen der zumindest einen Messrolle und der Anpressrolle zu erhöhen, sodass eine Leitung leicht zwischen der Messrolle und der Anpressrolle einlegbar ist. Mithilfe des Messrollenantriebs lässt sich der Abstand verringern, sodass die zumindest eine Messrolle die bereitgestellte Leitung mit ihrem Messrollenumfang berührt und gegebenenfalls gegen die Andruckrolle presst. Die zumindest eine Messrolle kann drehbar am Träger gelagert sein, wodurch die Leitung beim Durchführen durch die zumindest eine Messrolle und die Andruckrolle geschont wird. Alternativ oder ergänzend kann die Andruckrolle drehbar am Träger der zweiten Rollenreihe gelagert sein, wodurch die Leitungsoberfläche beim Durchführen minimal beansprucht wird.

Insbesondere ist der Messrollenantrieb ein Pneumatikantrieb, womit die zumindest eine Messrolle einfach einen vordefinierten Anpressdruck auf die zu begradigende Leitung ausüben kann.

Vorzugsweise weist die Messeinrichtung zum Bestimmen des Leitungsdurchmessers zumindest einen Sensor aus der folgenden Gruppe auf: Wegsensor, Positionssensor, Distanzsensor. Mit diesen Sensoren kann ein Abstand zwischen der zumindest einen Messrolle und der Andruckrolle bestimmt werden. Anhand der Messdaten des Sensors ist der Leitungsdurchmesser einfach bestimmbar.

Bevorzugterweise ist die Andruckrolle an der zweiten Rollenreihe angeordnet. Damit kann die Andruckrolle an ihrer Achse fest mit dem Richtwerk verbunden werden, sodass die zu begradigende Leitung stabil auf der Andruckrolle aufliegt.

Insbesondere weist die zweite Rollenreihe mehrere Rollen auf, wobei die Andruckrolle der Messeinrichtung als eine der mehreren Rollen ausgebildet ist. Damit ist die Andruckrolle direkt an der zweiten Rollenreihe montiert, wodurch diese stabil am Richtwerk gehalten wird.

Die Richtvorrichtung weist eine Steuerungseinrichtung auf. Die Steuerungseinrichtung kann mit zumindest einem hier vorliegend beschriebenen Antrieb der Richtvorrichtung verbunden sein, wodurch dieser zumindest eine Antrieb automatisch steuerbar ist. Die mit der Steuerungseinrichtung verbundenen Komponenten bzw. Bauteile der Richtvorrichtung sind zum Austausch von Messdaten, Sensordaten und/oder Steuerdaten bzw. Steuerbefehle mit der Steuerungseinrichtung verbunden. Dieser Austausch kann mithilfe einer Kabelverbindung zwischen der Steuerungseinrichtung und der Komponente bzw. dem Bauteil erfolgen und/oder drahtlos via WLAN, LAN, Bluetooth^{®} oder anderer drahtlose Austauschmöglichkeiten erfolgen.

Bevorzugt weist die Steuerungseinrichtung eine Recheneinheit und eine Speichereinheit auf. Die Recheneinheit sowie die Speichereinheit sind miteinander verbunden. Die Recheneinheit ist ausgebildet, um zumindest einen Steuerbefehl für den zumindest einen Antrieb der Richtvorrichtung zu erstellen und diesen gegebenenfalls an die Speichereinheit zu übermitteln. Die Speichereinheit speichert den zumindest einen Speicherbefehl. Die Recheneinheit empfängt Messdaten von der Messeinrichtung und ermittelt daraus direkt oder indirekt einen Sollwert. Weiters können Sollwerte zum Zustellen der ersten Rollenreihe relativ zur zweiten Rollenreihe in der Speichereinheit hinterlegt sein, welche von der Recheneinheit abgerufen werden können. Die Recheneinheit ist somit in weiterer Folge geeignet, einen Steuerbefehl für den zumindest einen Antrieb im Richtwerk auf Basis des Sollwerts zu erstellen.

Insbesondere ist die Steuerungseinrichtung mit einer Datenbank verbunden. Damit lassen sich typischerweise extern erstellte Steuerbefehle, extern gesicherte Sollwerte, oder extern gesicherte leitungsspezifische Parameter von der Datenbank durch die Steuerungseinrichtung abrufen. Diese hinterlegten Sollwerte, Steuerbefehle und/oder leitungsspezifischen Parameter sind in der Recheneinheit zum Erstellen eines Steuerbefehls für den zumindest einen Antrieb in der Richtvorrichtung verwendbar. Weiters kann die Datenbank geeignet sein, die zuvor genannten Sollwerte zu speichern. Diese gespeicherten Sollwerte werden gegebenenfalls an die Recheneinheit der Steuerungseinrichtung übermittelt und dort weiterverarbeitet.

Bevorzugterweise ist die Messeinrichtung mit der Steuerungseinrichtung zum Übermitteln von Messdaten verbunden. Die von der Messeinrichtung ermittelten Messdaten können somit an die Steuerungseinrichtung sowie an die Recheneinheit übergeben werden und darin weiterverarbeitet werden.

Insbesondere ist die Messeinrichtung mit der Steuerungseinrichtung zum Übermitteln des Leitungsdurchmessers oder eines entsprechenden Wertes verbunden, sodass die Steuerungseinrichtung den Wert des Leitungsdurchmessers direkt übermittelt bekommt, oder mithilfe des entsprechenden Wertes einen Leitungsdurchmesser in der Recheneinheit bestimmen kann.

Bevorzugt ist die Steuerungseinrichtung mit dem Messrollenantrieb verbunden. Die Steuerungseinrichtung steuert zumindest den Messrollenantrieb, mit welchem die zumindest eine Messrolle an die Anpressrolle kontrolliert angenähert wird. Beim Annähern der zumindest einen Messrolle zu der Anpressrolle berührt die zumindest eine Messrolle die zwischen der zumindest einen Messrolle und der Anpressrolle angeordnete Leitung. Der Abstand zwischen der zumindest einen Messrolle und der Anpressrolle wird von der Messeinrichtung an die Steuerungseinrichtung übermittelt.

Das Richtwerk weist einen Zustellantrieb auf, mit welchem die erste Rollenreihe relativ zur zweiten Rollenreihe zustellbar ist.

Damit lässt sich die erste Rollenreihe relativ zur zweite Rollenreihe bewegen und ein bestimmter Abstand zwischen der ersten Rollenreihe und der zweiten Rollenreihe einstellen. Der Abstand ergibt sich aus dem Leitungsdurchmesser einer entsprechen zwischen der ersten Rollenreihe und der zweiten Rollenreihe eingebrachten Leitung. Nach dem Zustellen ist die Leitung zwischen der ersten Rollenreihe und der zweiten Rollenreihe festgehalten bzw. umfasst.

Bevorzugt wird der Abstand einer vorangehenden Messung des Leitungsdurchmessers der Leitung durch die Messung berücksichtigt. Dazu kann die Steuerungseinrichtung mit dem Zustellantrieb verbunden sein und entsprechende Steuerbefehle an den Zustellantrieb übermittelt werden.

Es kann vorgesehen sein, einen Sollwert des Abstands mit einem Istwert des Abstandes, der anhand des Leitungsdurchmessers bestimmt wird, fortlaufend zu vergleichen. Dazu kann am Zustellantrieb eine Messvorrichtung vorgesehen sein.

Insbesondere ist der Zustellantrieb als Pneumatikantrieb ausgebildet, wodurch das Zustellen des Richtwerks kontrolliert erfolgt und ein geeigneter Haltedruck auf die zu begradigende Leitung ausgeübt wird.

Das Richtwerk weist einen Schwenkantrieb zum Einstellen eines Winkels zwischen einer Rollenachse der ersten Rollenreihe und einer Rollenachse der zweiten Rollenreihe auf. Dabei wird die zu begradigende Leitung zwischen der ersten Rollenreihe und der zweiten Rollenreihe zumindest abschnittweise aufgrund des eingestellten Winkels eingeklemmt, sodass die zu begradigende Leitung im Richtwerk abschnittsweise festgehalten wird. Damit wird das Begradigen der Leitung ausserhalb des Richtwerks verbessert. Typischerweise ist der Schwenkantrieb mit der Steuerungseinrichtung verbunden, sodass die Steuerungseinrichtung Steuerbefehle an den Schwenkantrieb übermitteln kann. Damit wird das Einklemmen der Leitung kontinuierlich kontrollierbar und gleichzeitig die eingeklemmte Leitung geschont. Eine Rollenreihe weist mehrere Rollen auf, welche im Wesentlichen entlang einer Förderrichtung der Leitung in der Richtvorrichtung angeordnet sind. Die Rollen einer Rollenreihe können entlang der Förderrichtung der Leitung voneinander beabstandet und versetzt zueinander angeordnet sein. Die hier vorliegend beschriebene Rollenachse der ersten Rollenreihe ist eine mathematische Achse, welche sich von einer ersten Rolle der ersten Rollenreihe bis zu einer weiteren Rolle der ersten Rollenreihe entlang der Förderrichtung der Leitung erstreckt. Die hier vorliegend beschriebene Rollenachse der zweiten Rollenreihe ist eine mathematische Achse, welche sich von einer ersten Rolle der zweiten Rollenreihe bis zu einer weiteren Rolle der zweiten Rollenreihe entlang der Förderrichtung der Leitung erstreckt. Typischerweise ist im geöffneten Zustand des Richtwerks die Rollenachse der ersten Rollenreihe entlang der Förderrichtung der Leitung im Wesentlichen parallel zur Rollenachse der zweiten Rollenreihe ausgerichtet.

Die Richtvorrichtung weist eine Zugkraftmesseinrichtung zum Bestimmen einer auf die Leitung wirkenden Leitungszugkraft auf. Dadurch wird das Begradigen der Leitung weiter verbessert. Dabei wird ein weiterer spezifischer Wert der Leitung in der Richtvorrichtung bestimmbar, womit das Zustellen der ersten Rollenreihe relativ zur zweiten Rollenreihe in dem hier vorliegend beschriebenen oder in dem nachfolgend beschriebenen Richtwerk weiter verbessert wird, sodass die Leitung beispielsweise beim Begradigen nicht überdehnt wird.

Bevorzugt weist die erste Rollenreihe mehrere Rollen auf, wobei die Rollen der ersten Rollenreihe versetzt zu den Rollen der zweiten Rollenreihe angeordnet sind. Damit lässt sich die Leitung zwischen den Rollen der ersten Rollenreihe und den Rollen der zweiten Rollenreihe einfach festhalten, da die Rollen der ersten Rollenreihe im zugestellten Zustand zumindest teilweise zwischen den Rollen der zweiten Rollenreihe angeordnet sind. Dabei ist ein gezieltes Verbiegen bzw. ein gezieltes Walken der Leitung im Richtwerk möglich, wodurch unerwünschte Spannungen in der Leitung entfernt werden können. Beim Walken wird die Leitung in unterschiedliche Raumrichtungen gezielt verformt, um Spannungen in der Leitung zu lösen.

Insbesondere sind die Rollen der ersten Rollenreihe und die Rollen der zweiten Rollenreihe jeweils auf einem Träger angeordnet. Einer der Träger weist Vorsprünge auf und einer der Träger weist Aussparungen auf, wobei die Vorsprünge zum Eingreifen in die Aussparungen ausgebildet sind. Damit lässt sich ein kompaktes Richtwerk herstellen. Im voneinander beabstandeten Zustand der beiden Träger wird somit sichergestellt, dass beim Zustellen der ersten Rollenreihe zu der zweiten Rollenreihe die Leitung nicht zwischen den beiden Trägern eingeklemmt werden kann, sondern zwingend auf den Rollen der ersten Rollenreihe und den Rollen der zweiten Rollenreihe angeordnet ist.

Ein weiterer Aspekt der Erfindung betrifft ein Verfahren zum Betreiben eines Richtwerkes in einer hier vorliegend beschriebenen Richtvorrichtung, wobei das Verfahren folgende Schritte umfasst:
- Bereitstellen einer elektrischen oder optischen Leitung zwischen einer ersten Rollenreihe und einer zweiten Rollenreihe in einem Richtwerk;
- Bestimmen des Leitungsdurchmessers der Leitung mithilfe einer Messeinrichtung;
- Berechnen eines Sollwertes zum Zustellen der ersten Rollenreihe relativ zur zweiten Rollenreihe anhand des bestimmten Leitungsdurchmessers;
- Zustellen der ersten Rollenreihe relativ zu der zweiten Rollenreihe entsprechend des Sollwertes.

Damit wird das Zustellen der ersten Rollenreihe relativ zur zweiten Rollenreihe in Abhängigkeit zu der im Richtwerk bereitgestellten Leitung ermöglicht, wodurch das Begradigen der Leitung verbessert wird.

Vorzugsweise erfolgen die Schritte
- Bestimmen des Leitungsdurchmessers der Leitung mithilfe einer Messeinrichtung;
- Berechnen eines Sollwertes zum Zustellen der ersten Rollenreihe relativ zur zweiten Rollenreihe anhand des bestimmten Leitungsdurchmessers; und
- Zustellen der ersten Rollenreihe relativ zu der zweiten Rollenreihe entsprechend des Sollwertes
wiederholt, wodurch das Zustellen im Richtwerk mehrmalig überprüft wird.

Insbesondere werden die zuvor genannten Schritte kontinuierlich ausgeführt, sodass das Richtwerk kontinuierlich eingestellt werden kann. Damit wird der Leitungsdurchmesser kontinuierlich im Richtwerk bestimmt, sodass eine gleichbleibende Begradigungsqualität der Leitung gewährleistet wird.

Bevorzugterweise wird zur Berechnung des Sollwertes im Richtwerk ein leitungsspezifischer Parameter berücksichtigt. Damit lässt sich ein leitungsspezifischer Parameter, typischerweise der Aufbau der Leitung selbst - beispielsweise die Anzahl der Leitungslitzen - und /oder Informationen zur Leitungsisolation - beispielsweise das Material der Leitungsisolation -, für die Berechnung des Sollwerts zum Zustellen der ersten Rollenreihe relativ zur zweiten Rollenreihe berücksichtigen.

Vorzugsweise wird nach dem Zustellen der ersten Rollenreihe relativ zu der zweiten Rollenreihe, die erste Rollenreihe relativ zu der zweiten Rollenreihe zum Entspannen der Leitung geöffnet. Damit kann eine dauerhafte plastische Verformung von Leitungsabschnitten der Leitung im zugestellten Zustand des Richtwerks verhindert werden.

Vorteilhaft erfolgt das Öffnen der erste Rollenreihe relativ zu der zweiten Rollenreihe zum Entspannen der Leitung, wenn die Förderbewegung der Leitung durch das Richtwerk unterbrochen wird. Es hat sich gezeigt, dass bereits kurze Unterbrechungszeiten zu plastischen Verformungen in der Leitung führen. Diese plastischen Verformungen führen dazu, dass die Weiterverarbeitung der Leitungen kaum noch möglich ist.

Bevorzugterweise umfasst die Richtvorrichtung eine Überwachungseinrichtung zum Überwachen der Begradigung der Leitung. Damit lässt sich die Wirkung des Richtwerks beim Begradigen der Leitung im Prozess überwachen, wodurch eine ungenügende Begradigung der Leitung frühzeitig festgestellt werden kann. Ungenügend begradigte Leitungen können beispielsweise frühzeitig aus dem Verarbeitungsprozess ausgeschieden werden, wodurch in weiterer Folge nur hinreichend begradigte Leitungen im Verarbeitungsprozess weitergeführt werden. Mit der Überwachungseinrichtung lässt sich ein vordefinierter Raum, wie beispielsweise ein zylindrischer Hüllraum direkt überwachen oder der Raum ausserhalb des zylindrischen Hüllraums überwachen.

Insbesondere ist die Überwachungseinrichtung eine optische oder eine akustische oder eine luftstromtechnische Überwachungseinrichtung. Damit lässt sich die begradigte Leitung bzw. die Wirkung des Richtwerks berührungslos überwachen. Beispielsweise sind eine oder mehrere Laservorhänge, oder Kamerasysteme oder Staudruckdrüsen als Überwachungseinrichtung einsetzbar, welche mehrere Winkelebenen um den vordefinierten Raum überwachen.

Vorzugsweise umfasst die Überwachungseinrichtung zumindest eine Kamera. Diese ermöglicht es, die Überwachungseinrichtung von der Richtvorrichtung bzw. vom Richtwerk zu beabstanden, sodass direkt an der Richtvorrichtung keine weiteren Bauteile zum Überwachen der begradigten Leitungen angeordnet sind.

Insbesondere wird die Überwachungseinrichtung mit zumindest einer Kamera mit zumindest zwei Lichtleitern ergänzt. Dabei nimmt die zumindest eine Kamera mithilfe der beiden Lichtleiter zwei oder mehrere Bildausschnitte auf, welche optisch zusammengefasst werden können Mithilfe der Bildausschnitte lässt sich die Wirkung des Richtwerks bzw. der Richtvorrichtung auf die begradigte Leitung bestimmen. Gegebenenfalls lässt sich mit der daraus erhaltenen Information das Begradigen der Leitung am Richtwerk bzw. an der Richtvorrichtung weiter verbessern.

Bevorzugt umfasst die Überwachungseinrichtung zumindest zwei Kameras, welche im Wesentlichen in einem Winkel von 90° zueinander angeordnet sind. Mit den Kameras können mehrere Winkelebenen aufgenommen werden, sodass in weiterer Folge ein vordefinierter Raum überwachbar ist, welche insbesondere im Wesentlichen als zylindrischer Hüllraum ausgebildet ist.

Ein weiterer Aspekt der Erfindung betrifft eine Kabelverarbeitungsmaschine umfassend eine zuvor beschriebene Richtvorrichtung mit einer Messeinrichtung zum Bestimmen eines Leitungsdurchmessers.

Damit wird eine Kabelverarbeitungsmaschine geschaffen, in welcher die Leitungen hinreichend begradigt werden, sodass die Endverarbeitung der Leitung in der Kabelverarbeitungsmaschine problemfrei erfolgt und ein Ausschuss verhindert.

Bevorzugt weist die Kabelverarbeitungsmaschine ein weiteres Richtwerk auf. Diese weitere Richtwerk kann wie vorliegend beschrieben ausgebildet sein. Das weitere Richtwerk ermöglicht eine weitere Verbesserung beim Begradigen der Leitung, da die zu begradigende Leitung nach dem einen Richtwerk auch durch das weitere Richtwerk geführt wird.

Bevorzugt ist das weiteres Richtwerk im Wesentlichen um 90° verdreht zum jeweiligen Richtwerk angeordnet. Die Richtwerke weisen jeweils eine Längsachse auf, die im Wesentlichen der Förderrichtung der Leitung entspricht. Verdreht bedeutet hier und in weiterer Folge, dass die Richtwerke um ihre Längsachse verdreht sind. Damit lässt sich die Leitung in eine erste Raumrichtung vom einem Richtwerk begradigen und zusätzlich in eine weitere Raumrichtung vom weiteren Richtwerk begradigen.

Insbesondere ist das weitere Richtwerk zwischen dem einen Richtwerk und der Messeinrichtung zum Bestimmen eines Leitungsdurchmessers der angeordnet. Damit kann die Leitung sowohl von dem einen Richtwerk wie auch von dem weiterem Richtwerk begradigt werden und anschliessend mit der jeweiligen Messeinrichtung bestimmt werden, sodass gegebenenfalls im Anschluss sowohl das eine Richtwerk sowie das weitere Richtwerk auf Basis der Messdaten der jeweiligen Messeinrichtungen einstellbar sind.

Bevorzugterweise weist die vorliegend beschriebene Kabelverarbeitungsmaschine eine Leitungsfördereinrichtung auf. Damit wird die Leitung kontrolliert durch die vorab beschriebenen Richtvorrichtungen gefördert, sodass das Begradigen der Leitung reproduzierbar durchgeführt werden kann.

Insbesondere weist die Leitungsfördereinrichtung zumindest einen Förderantrieb auf, der mit der Steuerungseinrichtung der vorab beschriebenen Richtvorrichtungen verbunden ist, sodass das Fördern der Leitung durch die zuvor beschriebenen Richtvorrichtungen mit den angeordneten Antrieben abstimmbar ist.

Offenbart ferner ist ein Verfahren zum Einstellen eines Richtwerkes in einer Richtvorrichtung zum Begradigen einer Leitung, insbesondere in einer wie zuvor beschriebenen Richtvorrichtung, wobei das Verfahren folgende Schritte umfasst:
- Bereitstellen der Leitung in einem Richtwerk und in einer Zugkraftmessung der Richtvorrichtung;
- Messen von Messdaten mit der Zugkraftmessung;
- Bestimmen eines Istwerts zu einer Leitungszugkraft auf Basis der gemessenen Messdaten;
- Bereitstellen, insbesondere berechnen, eines Sollwertes zum Verschwenken einer ersten Rollenreihe des Richtwerkes;
- Verschwenken der ersten Rollenreihe des Richtwerkes relativ zu einer zweiten Rollenreihe des Richtwerkes anhand des Sollwertes.

Mithilfe der Zugkraftmessung und der darin bestimmten Zugkraft ist diese für jede zu begradigende Leitung bestimmbar, worauf in weiterer Folge die Richtvorrichtung auf die jeweilige zu begradigende Leitung einstellbar ist und ein Überdehnen der Leitung beim Begradigen verhindert wird.

Vorzugsweise werden die Schritte
- Messen von Messdaten mit der Zugkraftmessung;
- Bestimmen eines Istwerts zu einer Leitungszugkraft auf Basis der gemessenen Messdaten;
- Berechnen eines Sollwertes zum Verschwenken einer ersten Rollenreihe des Richtwerkes;
- Verschwenken der ersten Rollenreihe des Richtwerkes relativ zu einer zweiten Rollenreihe des Richtwerkes anhand des Sollwertes wiederholt.

Ein Wiederholen bzw. ein mehrmaliges Wiederholen der zuvor genannten Schritte ermöglicht ein stetiges Verbessern der Prozessschritte beim Begradigen der Leitung. Insbesondere werden die zuvor genannten Schritte kontinuierlich ausgeführt. Dies ermöglicht das kontinuierliche Einstellen

Bevorzugt werden die Messdaten von der Zugkraftmessung an eine Steuerungseinrichtung der Richtvorrichtung übermittelt und in der Recheneinheit der Steuerungseinrichtung weiterverarbeitet. Die Steuerungseinrichtung erkennt die zu begradigende Leitung, wobei beispielsweise leitungsspezifische Parameter von einem Benutzer der Steuerungseinrichtung übermittelt werden. Dabei bestimmt oder berechnet die Recheneinheit aus den Messdaten einen Istwert zur Leitungszugkraft. Weiters ruft die Recheneinheit einen Sollwert für die Leitungszugkraft für die zu begradigende Leitung aus einer Speichereinheit oder einer Datenbank ab.

Insbesondere ist die Recheneinheit der Steuerungseinrichtung ausgebildet, um einen Istwert-Sollwert-Vergleich zur Leitungszugkraft durchzuführen und anschliessend einen entsprechenden Steuerbefehl für das Verschwenken für den Schwenkantrieb zu erstellen. Dieser wird anschliessend an den Schwenkantrieb übermittelt.

Bevorzugterweise umfasst das Verfahren weiters die Schritte
- Bestimmen des Leitungsdurchmessers mithilfe einer Messeinrichtung;
- Berechnen eines Sollwertes zum Zustellen der ersten Rollenreihe relativ zur zweiten Rollenreihe anhand des bestimmten Leitungsdurchmessers; und
- Zustellen der ersten Rollenreihe relativ zu der zweiten Rollenreihe entsprechend des Sollwertes.

Damit lässt sich das Richtwerk hinreichend zustellen, sodass sich eine anschliessend ausgeführte Zugkraftmessung reproduzierbar durchführen lässt. Insbesondere werden die zuvor genannten Schritte kontinuierlich ausgeführt, sodass das Richtwerk kontinuierlich eingestellt werden kann. Damit wird der Leitungsdurchmesser kontinuierlich im Richtwerk bestimmt, sodass eine gleichbleibende Begradigungsqualität der Leitung gewährleistet wird. Vorzugsweise wird ein leitungsspezifischer Parameter bereitgestellt, welcher für die Berechnung der Leitungszugkraft verwendet wird. Damit lässt sich das Einstellen des Richtwerks auf die jeweiligen Leitungseigenschaften abstimmen.

Bevorzugterweise wird die Wirkung der eingestellten Richtvorrichtung auf die Leitung mit einer Überwachungseinrichtung überprüft und die Überprüfungsdaten in einer Speichereinheit gespeichert. Die Überprüfungsdaten werden an die Steuerungseinrichtung übermittelt, welche die Überprüfungsdaten weiterverarbeitet.

Vorzugsweise wird nach dem Zustellen der ersten Rollenreihe relativ zu der zweiten Rollenreihe, die erste Rollenreihe relativ zu der zweiten Rollenreihe zum Entspannen der Leitung geöffnet. Damit kann eine dauerhafte plastische Verformung von Leitungsabschnitten der Leitung im zugestellten Zustand des Richtwerks verhindert werden.

Vorteilhaft erfolgt das Öffnen der erste Rollenreihe relativ zu der zweiten Rollenreihe zum Entspannen der Leitung, wenn die Förderbewegung der Leitung durch das Richtwerk unterbrochen wird. Bereits kurze Unterbrechungszeiten bei der Förderbewegung der Leitung können zu plastischen Verformungen in der Leitung führen. Diese plastischen Verformungen führen dazu, dass die Weiterverarbeitung der Leitungen kaum noch möglich ist.

Offenbart ferner ist ein Verfahren zum Einstellen eines Richtwerkes in einer Richtvorrichtung zum Begradigen einer Leitung, wobei das Verfahren folgende Schritte umfasst:
- Bereitstellen der Leitung in einem Richtwerk;
- Zustellen einer ersten Rollenreihe relativ zu einer zweiten Rollenreihe;
- Fördern der Leitung durch das zugestellte Richtwerk;
- Öffnen der ersten Rollenreihe relativ zu der zweiten Rollenreihe, zum Entspannen der Leitung im Richtwerk;
- Erneutes Zustellen der ersten Rollenreihe relativ zu der zweiten Rollenreihe.

Damit wird verhindert, dass bei einer Unterbrechung der Förderbewegung der Leitung durch das Richtwerk, sich eine plastische Verformung in der eingespannten Leitung ausbilden kann. Bereits eine kurze Unterbrechung der Förderbewegung der Leitung kann im Bereich der Rollen des Richtwerks zu einer plastischen Verformung (eine Wellenform) im eingespannten Leitungsabschnitt führen. Diese plastische Verformung in diesem Leitungsabschnitt führt dazu, dass dieser Leitungsabschnitt in weiterer Folge nicht mehr weiterverarbeitet werden kann.

Offenbart ferner ist ein computerimplementiertes Verfahren zum automatischen Bestimmen und Erzeugen von Datensätzen und/oder Steuerbefehlen zum Steuern zumindest einer, insbesondere wie vorliegend beschriebenen, Richtvorrichtung mit einer Messeinrichtung zum Bestimmen eines Leitungsdurchmessers und/oder einer, insbesondere wie vorliegend beschriebenen, Richtvorrichtung mit einer Zugkraftmessung, welche ein Verfahren zum Begradigen oder Einstellen einer Leitung, insbesondere die wie vorliegend beschriebenen Verfahren, ausführt.

Offenbart ferner ist ein Computerprogrammprodukt, umfassend Steuerbefehle, die bewirken, dass die hier beschriebenen Richtvorrichtungen die beschriebenen Verfahrensschritte ausführen, sowie ein computerlesbares Medium, auf dem das Computerprogramm gespeichert ist.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile, Bezugszeichen mit unterschiedlichen Indizes geben funktionsgleiche oder ähnliche Bauteile an.

Es zeigen dabei:
- Fig. 1: eine Richtvorrichtung mit offenem Richtwerk und einer Messeinrichtung zum Bestimmen eines Leitungsdurchmessers in einer Seitenansicht,
- Fig. 2: die Richtvorrichtung gemäss Fig.1 mit zugestelltem Richtwerk in einer Seitenansicht,
- Fig. 3: eine Richtvorrichtung mit einer Zugkraftmessung in einer Seitenansicht,
- Fig. 4: die Richtvorrichtung gemäss Fig. 3 in einer Seitenansicht,
- Fig. 5: eine Ausführungsform der erfindungsgemässen Richtvorrichtung einer Seitenansicht,
- Fig. 6: eine weitere Ausführungsform der erfindungsgemässen Richtvorrichtung gemäss Fig. 5 in einer Seitenansicht, und
- Fig. 7: eine erfindungsgemässe Kabelverarbeitungsmaschine mit einer Richtvorrichtung gemäss Fig. 6 in einer Seitenansicht.

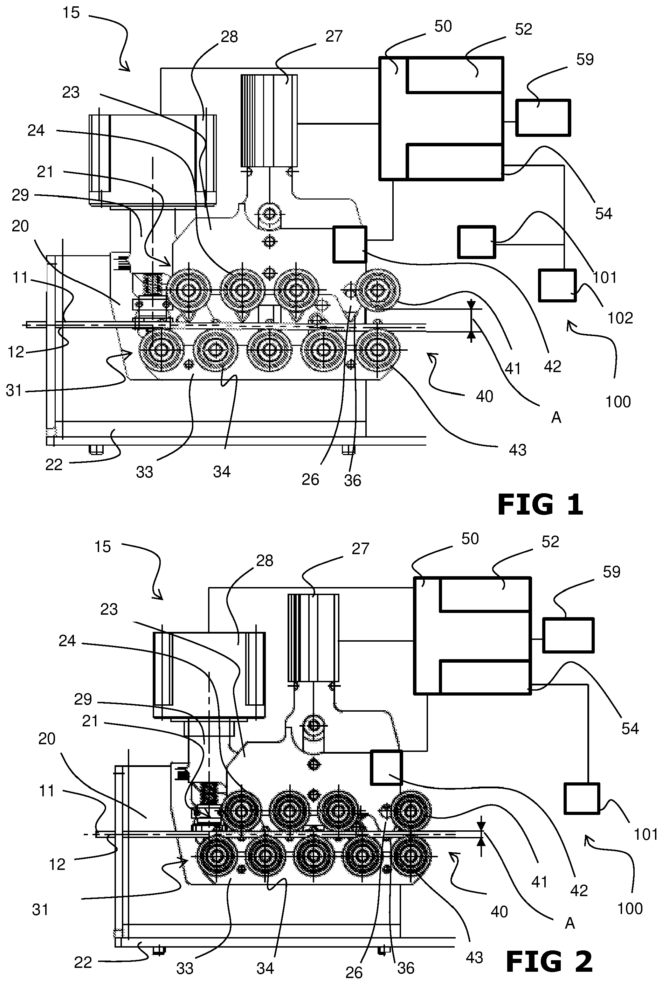

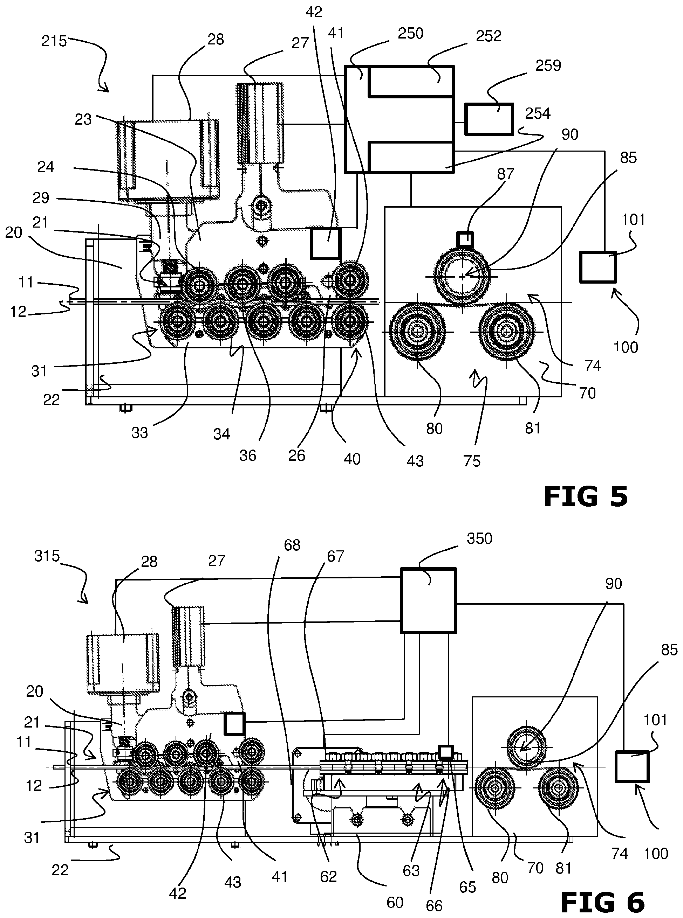

Die Figuren 1 bis 4 erläutern primär Teilaspekte der vorliegenden Erfindung, welche für sich alleine nicht in den Schutzbereich der Ansprüche fallen. Die Figuren 5 bis 7 illustrieren die Erfindung wie beansprucht.

Fig. 1 zeigt eine Richtvorrichtung 15 zum Begradigen einer elektrischen oder optischen Leitung 11 mit einem Richtwerk 20, mit einer Steuerungseinrichtung 50 und mit einer Überwachungseinrichtung 100. Das Richtwerk 20 umfasst eine Basis 22, an der eine erste Rollenreihe 21, mit mehreren drehbar gelagerten Rollen 24, angeordnet ist und eine zweite Rollenreihe 31, mit mehreren drehbar gelagerten Rollen 34, angeordnet ist. In dieser Figur und in den nachfolgenden Figuren wird eine Rolle 24 stellvertretend für die mehreren Rollen 24 sowie eine Rolle 34 stellvertretend für die mehreren Rollen 34 mit dem jeweiligen Bezugszeichen versehen. Das dargestellte Richtwerk 20 befindet sich in einem geöffneten Zustand, wobei die Leitung 11 zwischen den Rollen 24 und den Rollen 34 durchgeführt ist und entlang der Leitungsachse 12 auf den Rollen 34 aufliegt. Die Rollen 24 sind entlang der Leitungsachse 12 versetzt zu den Rollen 34 angeordnet. Die erste Rollenreihe 21 ist auf einem ersten Träger 23 angeordnet und die zweite Rollenreihe ist auf einem zweiten Träger 33 angeordnet. Der erste Träger 23 weist Vorsprünge 26 auf und der zweite Träger 33 weist Aussparungen 36 auf, welche zumindest teilweise ineinandergreifen. Das Richtwerk 20 umfasst einen Zustellantrieb 27 und einen Schwenkantrieb 28, welche jeweils mit der Steuerungseinrichtung 50 verbunden sind. Der Zustellantrieb 27 umfasst einen pneumatisch geregelten Antrieb und stellt die erste Rollenreihe 21 zur zweiten Rollenreihe 31 zu, sodass sich der Abstand zwischen der ersten Rollenreihe 21 und der zweiten Rollenreihe 31 verringern wird, bis die Rollen 24 der ersten Rollenreihe 21 die Leitung 11 berühren und die Leitung 11 halten bzw. bis die Leitung 11 zwischen den Rollen 24 und den Rollen 34 eingeklemmt ist. Der Schwenkantrieb 28 umfasst eine Einstellspindel 29, welche die erste Rollenreihe 21 in einem einstellbaren Winkel zur zweiten Rollenreihe 31 verschwenkt, sodass die zu begradigende Leitung 11 abschnittsweise im Richtwerk 20 eingeklemmt bzw. festgehalten wird.

Die Richtvorrichtung 20 umfasst eine Messeinrichtung 40 zum Bestimmen des Leitungsdurchmessers der Leitung 11, welche am Richtwerk 20 angeordnet ist. Die Messeinrichtung 40 umfasst eine drehbar gelagerte Messrolle 41, welche beweglich am ersten Träger 23 angeordnet ist und einen Messrollenantrieb 42. Die Messeinrichtung 40 umfasst zusätzlich eine drehbar gelagerte Anpressrolle 43, welche fest am zweiten Träger 33 angeordnet ist. Die Anpressrolle 43 ist im Wesentlichen direkt gegenüber der Messrolle 41 angeordnet, wobei die Leitung 11 auf der Anpressrolle 43 aufliegt und von dieser in der Messeinrichtung 40 im geöffneten Zustand gehalten wird. Die Messrolle 41 ist von der Anpressrolle 43 beabstandet (Abstand A) und ist mit dem Messrollenantrieb 42 verbunden, welcher die Messrolle 41 zu der Leitung 11 zustellt bzw. an die Anpressrolle 43 annähert. Der Messrollenantrieb 42 ist ausgebildet, die Messrolle 41 von der Leitung 11 zu entfernen bzw. die Messrolle 41 von der Anpressrolle 43 zu entfernen. Die Messeinrichtung 40 und der Messrollenantrieb 42 sind mit der Steuerungseinrichtung 50 verbunden. Der Messrollenantrieb 42 umfasst einen pneumatischen Antrieb, mit dem die Messrolle 41 mit einem Anpressdruck an die Leitung 11 gedrückt wird, sodass die Leitung 11 an die Anpressrolle 34 gepresst wird.

Fig. 2 zeigt die zuvor beschriebene Richtvorrichtung 15, wobei die erste Rollenreihe 21 bereits zur zweiten Rollenreihe zugestellt ist, wodurch sich das Richtwerk 20 bereits in einem geschlossenen Zustand befindet. Dabei liegen die Rollen 24 der ersten Rollenreihe 21 auf der Leitung 11 auf. Am Messrollenantrieb 42 ist ein Wegsensor angeordnet, welcher den zurückgelegten Weg der Messrolle 41 vom geöffneten Zustand gemäss Fig. 1 zum hier gezeigten geschlossenen Zustand ermittelt. Dieser zurückgelegte Weg der Messrolle 41 wird als Messdaten an die Steuerungseinrichtung 50 übermittelt Die Steuerungseinrichtung 50 umfasst eine Recheneinheit 52 und eine Speichereinheit 54, welche in der Steuerungseinrichtung 50 integriert sind und miteinander verbunden sind. Die Steuerungseinrichtung 50 ist mit einer Datenbank 59 verbunden. Die Steuerungseinrichtung 50 übermittelt die empfangenen Messdaten an die Recheneinheit 52. Die Recheneinheit 52 bestimmt anhand der übermittelten Messdaten den Leitungsdurchmesser der Leitung 11 bzw. den Abstand A zwischen der Messrolle 41 und der Anpressrolle 43, welcher dem Leitungsdurchmesser der Leitung 11 entspricht, und berechnet aus dem bestimmten Leitungsdurchmesser einen Sollwert zum Zustellen der ersten Rollenreihe 21 zur zweiten Rollenreihe 31. Dabei berücksichtigt die Recheneinheit 52 leitungsspezifische Parameter der Leitung 11, welche die Recheneinheit entweder von der Speichereinheit 52 oder von der Datenbank 59 abruft. Die Recheneinheit 52 erstellt anhand des berechneten Sollwerts einen Steuerbefehl zum Zustellen der ersten Rollenreihe 21 zur zweiten Rollenreihe 31. Der berechnete Sollwert und/oder der erstellte Steuerbefehl wird anschliessend in der Speichereinheit 54 oder und/oder in der Datenbank 59 gespeichert. Alternativ ruft die Recheneinheit von der Speichereinheit 54 oder von der Datenbank 59 einen Steuerbefehl für den Zustellantrieb 27 auf, welche dem berechneten Leitungsdurchmesser der Leitung 11 entspricht. Die Steuerungseinrichtung 50 übermittelt den Steuerbefehl an den Zustellantrieb 27. Der Zustellantrieb 27 stellt die erste Rollenreihe 21 zu der zweiten Rollenreihe 31 entsprechend des berechneten Sollwerts zu. Anschliessend wird die erste Rollenreihe 21 mithilfe des Schwenkantriebs 28 zur zweiten Rollenreihe 34 verschwenkt, sodass ein Winkel zwischen der Rollenachse 25 der ersten Rollenreihe 21 und der Rollenachse 35 der zweiten Rollenreihe 31 eingestellt wird. Damit wird die Leitung 11 zwischen der ersten Rollenreihe 21 und der zweiten Rollenreihe 31 eingeklemmt, worauf in weiterer Folge das Begradigen der Leitung 11 durchgeführt wird, indem an der Leitung 11 entlang der Leitungsachse 12 gefördert wird, sodass eine hinreichend begradigte Leitung entsteht. Durch den Winkel wird die Leitung 11 degressiv gerichtet, d.h. zunächst relativ stark verformt und durch die nachfolgenden Rollen mit abnehmender Amplitude verformt. Dadurch verliert die gerichtete Leitung ihr "Formgedächtnis" für die nachfolgende Verarbeitung. (nicht gezeigt). Eine hinreichend begradigte Leitung 11 ist daran erkennbar, dass diese nach dem Begradigen in einem vordefinierten Raum, beispielsweise in einem zylindrischen Hüllraum, einführbar ist und dabei die Grenzen dieses Raums nicht verlässt. Zusätzlich zu beachten ist, dass die Leitung 11 aufgrund ihres Formgedächtnisses die plastische Verformung aufnimmt, die sie zwischen den Rollen 24 bzw. 34 erhält, wenn die Förderbewegung der Leitung 11 durch das Richtwerk 20 unterbrochen wird. Deshalb können die Richtwerke 20 bei einer Unterbrechung der Förderbewegung der Leitung 11 soweit entspannt werden, indem die erste Rollenreihe 21 relativ zu der zweiten Rollenreihe 31 geöffnet wird, sodass die Leitung 11 keine plastische Verformung aufnimmt. Sobald die Förderbewegung der Leitung 11 wieder gestartet wird, werden die Richtwerke 20 wieder auf den zuvor bestimmten Sollwert gesetzt. Auf diese Weise werden Verformungen der Leitung im Förderstillstand sicher verhindert.

Die Richtvorrichtung 15 umfasst eine Überwachungseinrichtung 100 zum Überwachen der Begradigung der Leitung 11. Die Überwachungseinrichtung 100 umfasst zwei Kameras 101 bzw. 102, welche mit der Steuerungseinrichtung 50 verbunden sind und um die begradigte Leitung 11 angeordnet sind (siehe Fig. 1). Die beiden Kameras 101 bzw. 102 sind in einem (Raum-)Winkel von 90° zueinander angeordnet. Die Kameras 101 bzw. 102 erstellen Überprüfungsdaten, indem die Kameras 101 bzw. 102 mehrere Bilder aufnehmen. Die beiden Kameras 101 bzw. 102 sind in der Umgebung der begradigten Leitung 11 angeordnet, sodass die Winkelebene der jeweiligen Kamera einen vordefinierten Raum, wie beispielweise einen zylindrischen Hüllraum, erfassen und Bilder von der begradigte Leitung 11 in diesem vordefinierten Raum aufnehmen sowie diese als Überprüfungsdaten an die Steuerungseinrichtung 50 übermitteln. Die Bilder werden in der Steuerungseinrichtung 50 weiterverarbeitet und gegebenenfalls bei der Berechnung des Sollwerts zum Zustellen der ersten Rollenreihe 21 zur zweiten Rollenreihe 31 berücksichtigt.

Die mithilfe der Fig. 1 und der Fig. 2 beschriebenen Schritte zum Zustellen der ersten Rollenreihe 21 relativ zur zweiten Rollenreihe 31 des Richtwerks 20 wird kontinuierlich ausgeführt und gegebenenfalls mehrmals wiederholt ausgeführt, bis eine hinreichend begradigte Leitung erstellt werden kann. Die zuvor beschriebene Messeinrichtung 40 kann vom Richtwerk 20 beabstandet sein und somit eine in der Richtvorrichtung 15 eigenständige angeordnete Messeinrichtung sein (nicht gezeigt).

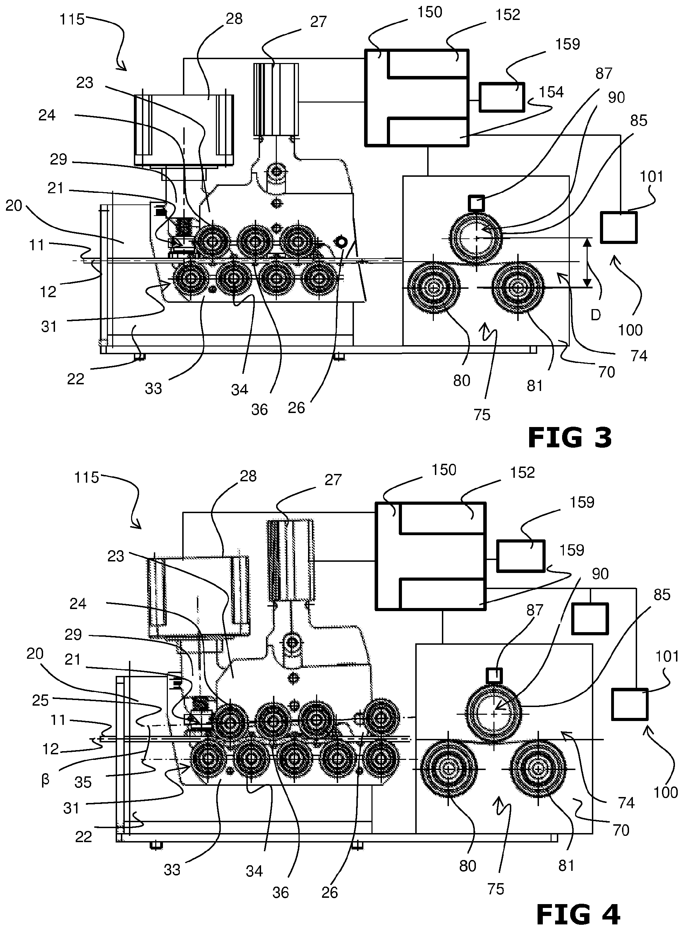

Fig. 3 zeigt eine weitere Richtvorrichtung 115 zum Begradigen einer elektrischen oder optischen Leitung 11 mit einem Richtwerk 120, mit einer Steuerungseinrichtung 150 und mit einer Überwachungseinrichtung 100. Im Gegensatz zur zuvor beschriebenen Richtvorrichtung weist die folgend beschriebene Richtvorrichtung 115 eine Zugkraftmessung 70 zum Bestimmen einer auf die Leitung 11 wirkenden Leitungszugkraft auf.

Bei der nachfolgenden Beschreibung zu der Fig. 3 und der Fig. 4 wird bei gleichen Bauteilen auf die Figuren 1 und 2 Bezug genommen.

Die Zugkraftmessung 70 weist eine Rollengruppe 74 auf, welche mit der Steuerungseinrichtung 150 verbunden ist. Die Rollengruppe 74 umfasst eine Stütze 75 und eine Pressrolle 85, wobei die Stütze 75 zweiteilig ist und eine erste Stützrolle 80 und eine zweite Stützrolle 81 umfasst, welche jeweils drehbar an der Stütze 75 gelagert sind. Die beiden Stützrollen 80 bzw. 81 sind voneinander beabstandet. Die Leitung 11 ist in der Rollengruppe 74 angeordnet, wobei die Leitung 11 auf den beiden Stützrollen 80 bzw. 81 aufliegt. Die Pressrolle 85 ist auf der Leitung 11 angeordnet. Dabei liegt die Pressrolle 85 derart auf der Leitung 11 auf, dass die Leitung 11 zumindest abschnittsweise zwischen die erste Stützrolle 80 und die zweite Stützrolle 81 gedrückt wird, sodass die geführte Leitung 11 im Wesentlichen V-förmig ausgelenkt wird. Die Pressrolle 85 ist mithilfe eines Pressrollenantriebs 87 vorteilhaft relativ zu den beiden Stützrollen 80 bzw. 81 bewegbar, sodass die Leitung 11 beim Durchführen durch die Rollengruppe 74, von der Pressrolle 85 ausgelenkt wird. An der Pressrolle 85 ist eine Sensoreinrichtung 90 angeordnet, welche die auf die Pressrolle 85 wirkende Radialkraft misst, wenn die Pressrolle 85 ausgelenkt wird. Dafür ist zwischen der Pressrolle 85 und dem Pressrollenantrieb 86 ein Kraftaufnehmer zum Messen der auf die Pressrolle 85 wirkenden Radialkraft angeordnet. Der Kraftaufnehmer weist mehrere Dehnmessstreifen auf, deren Spannungen anhand einer Wheatstoneschen Messbrücke abgleichbar sind. Die Pressrolle 85 ist an einem Schlitten angeordnet und entlang einer Schlittenführung bewegbar (nicht gezeigt). Mithilfe des Pressrollenantriebs 86 lässt sich der Abstand D zwischen der Pressrolle 85 und der Stützrollen 80 bzw. 81 einstellen. Die Pressrolle 85 ist drehbar am Schlitten gelagert. Die Sensoreinrichtung 90 ist mit der Steuerungseinrichtung 150 verbunden und übermittelt die vom Dehnmessstreifen gemessenen, an der Pressrolle 85 wirkende Radialkraft sowie den zuvor genannten Abstand D als Messdaten an die Steuerungseinrichtung 150. Zusätzlich ist der, wie in den Fig. 1 und Fig. 2 beschrieben, gemessene Leitungsdurchmesser sowie der Abstand zwischen den Stützrollen 80 und 81 in der Steuerungseinrichtung 150 gespeichert. Die in der Steuerungseinrichtung 150 angeordnete Recheneinheit 152 berechnet aus den Messdaten sowie den gespeicherten Daten einen Istwert der auf die Leitung 11 wirkenden Leitungszugkraft. Die Recheneinheit 152 ist mit der Speichereinheit 154 und der Datenbank 159 verbunden, sodass die Recheneinheit 152 leitungsspezifische Parameter zur Leitung 11 abrufen kann und diese gegebenenfalls bei der Berechnung der auf die Leitung 11 wirkenden Leitungszugkraft berücksichtigt. Die Recheneinheit 152 berechnet einen Sollwert für die Leitungszugkraft der zu begradigenden Leitung 11 oder ruft einen Sollwert für die Leitungszugkraft der Leitung 11 aus der Speichereinheit 154 bzw. der Datenbank 159 auf. Anschliessend führt die Recheneinheit 152 einen Istwert-Sollwert-Vergleich zur Leitungszugkraft durch und erstellt auf Basis des Istwert-Sollwert-Vergleichs einen Steuerbefehl für den Schwenkantrieb 28.

Falls der Istwert der Leitungszugkraft dem Sollwert entspricht, ist keine Änderung des Winkels β erforderlich. Falls der Istwert der Leitungszugkraft kleiner ist, als der zulässige Sollwert, wird der Winkel β durch den Schwenkantrieb 28 so geändert, dass die Leitung 11 stärker gewalkt wird, so dass hieraus beim Fördern eine größere Leitungszugkraft resultiert. Falls der Istwert der Leitungszugkraft größer ist, als der zulässige Sollwert, wird der Winkel β durch den Schwenkantrieb 28 entsprechend geöffnet, so dass hieraus beim Fördern eine kleinere Leitungszugkraft resultiert. Im Anschluss an die beschriebene Korrektur des Winkels β ist eine erneute Messung der Leitungszugkraft mit anschließendem Istwert-Sollwert-Vergleich erforderlich, dies eventuell mehrfach. Ziel ist die möglichst exakte Einhaltung des zulässigen Sollwertes.

Der zuvor genannte Steuerbefehl wird von der Steuerungseinrichtung 150 an den Schwenkantrieb 28 übermittelt, sodass dieser mithilfe der Einstellspindel 29 die erste Rollenreihe 21 gegenüber der zweiten Rollenreihe 31 verschwenkt, sodass der Winkel β zwischen der Rollenachse 25 der ersten Rollenreihe 21 und der Rollenachse 35 der zweiten Rollenreihe 31 resultierend aus dem Berechnungsergebnis der Steuerungseinrichtung 150 eingestellt wird. Der berechnete Sollwert des Winkels β ist in der Speichereinheit 154 oder in der Datenbank 159 hinterlegbar.

Fig. 4 zeigt die Richtvorrichtung 115 gemäss Fig. 3 mit einer zur zweiten Rollenreihe 31 verschwenkten ersten Rollenreihe 21 im Richtwerk 20, wobei die Rollenachse 25 der ersten Rollenreihe 21 um einem Winkel β zu der Rollenachse 35 der zweiten Rollenreihe 31 verschwenkt ist. Das Verschwenken bewirkt ein abschnittsweises Verbiegen der Leitung 11 im Richtwerk 20, wobei die Rollen 24 der ersten Rollenreihe 21 versetzt zu den Rollen 34 der zweiten Rollenreihe 31 angeordnet sind. Dadurch wird die Leitung zwischen den Rollen 24 und den Rollen 34 festgehalten. Wird an der Leitung 11 im Richtwerk 20 gezogen, verändert sich die auf die Pressrolle 85 wirkende Radialkraft, wodurch die Auslenkung der Pressrolle 85 verändert wird. Die dadurch von der Sensoreinrichtung 90 gemessenen weiteren Messdaten werden an die Steuerungseinrichtung 150 übermittelt. Mit den weiteren Messdaten wird, wie zuvor beschrieben, ein neuer Sollwert für die auf die Leitung 11 wirkende Leitungszugkraft in der Recheneinheit 152 erstellt und die zuvor genannten Schritte wiederholt, bis die Verschwenkung der ersten Rollenreihe 21 zu der zweiten Rollenreihe 31 schrittweise derart optimiert wurde, dass die Zugkraft einem Wert entspricht, der mit einer hinreichend begradigten Leitung 11 korreliert und der für die Leitung zulässig ist, also die Leitung nicht überdehnt bzw. zerstört. Die genannten Schritte werden wiederholt und kontinuierlich ausgeführt. Gegebenenfalls wird der neue Sollwert der Leitung bzw. der Leitungszugkraft der Leitung 11 zugeordnet und in einer Tabelle in der Speichereinheit 154 oder der Datenbank 159 gespeichert.

Die beschriebene Richtvorrichtung 115 umfasst eine Überwachungseinrichtung 100 zum Überwachen der Begradigung der Leitung 11, wie bereits zuvor in der Fig. 1 und der Fig. 2 beschrieben.

Die Fig. 5 zeigt eine Richtvorrichtung 215 gemäss Fig. 1 und Fig. 2. Zusätzlich weist diese Richtvorrichtung 215 eine Zugkraftmessung 70 auf, wie sie unter Bezugnahme auf die Fig. 3 und Fig. 4 beschrieben ist.

Bei der nachfolgenden Beschreibung wird bei gleichen Bauteilen auf die Figuren 1 bis 4 Bezug genommen.

Die Richtvorrichtung weist ein Richtwerk 20 auf. An diesem Richtwerk angeordnet findet sich die Messeinrichtung 40 (siehe ebenfalls in Fig. 1 und Fig. 2). In Förderrichtung des Leiters 11 nachgeordnet befindet sich die Zugkraftmessung 70, wie sie zu der Richtvorrichtung 115 gemäss Fig. 3 und Fig. 4 beschrieben wurde. Das Begradigen der Leitung 11 erfolgt in dieser Richtvorrichtung 215, wie bereits im Detail in den Fig. 1 und Fig. 2 sowie in den Fig. 3 und Fig. 4 beschrieben. Die Richtvorrichtung 215 weist eine Steuerungseinrichtung 250 auf, welche ausgebildet ist, die Steuerbefehle der Steuerungseinrichtung 50 gemäss Fig. 1 und Fig. 2 sowie die Steuerbefehle der Steuerungseinrichtung 250 gemäss Fig. 3 und Fig. 4 zu erstellen und an die wie zuvor beschriebenen Antriebe zu übermitteln. Dazu weist die Steuerungseinrichtung 250 eine Recheneinheit 252 auf, welche geeignet ist die Berechnungen der Recheneinheit gemäss Fig. 1 und Fig. 2 sowie die Berechnungen der Recheneinheit gemäss Fig. 3 und Fig. 4 auszuführen und gegebenenfalls zu kombinieren. Nach dem Bereitstellen der Leitung 11 im Richtwerk 20, erfolgt das Bestimmen des Leitungsdurchmessers der Leitung 11 mit der Messrolle 41 und der Anpressrolle 43 der Messeinrichtung 40. Die von der Messeinrichtung 40 gemessenen Messdaten werden anschliessend an die Recheneinheit 252 übermittelt und ein Sollwert zum Zustellen der ersten Rollenreihe 21 zur zweiten Rollenreihe 31 anhand des bestimmten Leitungsdurchmessers berechnet. Der auf Basis des Sollwerts erstellte Steuerbefehl wird an den Zustellantrieb 27 übermittelt und die erste Rollenreihe 21, wie vorher beschrieben, zugestellt. Anschliessend wir die Leitung 11 in der Zugkraftmessung 70 bereitgestellt, indem die Leitung 11 durch die Rollengruppe 74 geführt wird. Anschliessend wird die an der Pressrolle 85 wirkende Radialkraft mit der Sensoreinrichtung 90 gemessen und die Messdaten an die Steuerungseinrichtung 250 übermittelt, die einen Istwert mit der Recheneinheit 252 berechnet und/oder einen Istwert-Sollwert-Vergleich durchführt. In weiterer Folge bestimmt die Recheneinheit 252 eine Leitungszugkraft an der Leitung 11, wie bereits in Fig. 3 und Fig. 4 beschrieben. Anschliessend erfolgt das Verschwenken der ersten Rollenreihe 21 des Richtwerkes 20 zu der zweiten Rollenreihe 31 des Richtwerkes 20 anhand des berechneten Istwerts bzw. des Istwert-Sollwert-Vergleichs. Die zuvor genannten Schritte werden wiederholt und kontinuierlich ausgeführt. Die Steuerungseinrichtung 250 weist eine Speichereinheit 254 und eine Datenbank 259 auf. Die beschriebene Richtvorrichtung 215 umfasst eine Überwachungseinrichtung 100 zum Überwachen der Begradigung der Leitung 11, wie bereits in der Fig. 1 und der Fig. 2 beschrieben.

Fig. 6 zeigt eine weitere Ausführungsform der erfindungsgemässen Richtvorrichtung 315 mit einer Richtvorrichtung gemäss Fig. 5 sowie mit einem weiteren Richtwerk 60. Bei der nachfolgenden Beschreibung wird bei gleichen Bauteilen auf die Figuren 1 bis 5 Bezug genommen. Das weitere Richtwerk 60 ist um deren Längsachse um 90° verdreht zum einen Richtwerk 20 angeordnet und zwischen dem einen Richtwerk 20 und der Rollengruppe 74 angeordnet. Das weitere Richtwerk 60 weist im Wesentlichen die gleichen Komponenten auf, wie das Richtwerk 20. Die Leitung 11 wird zwischen der ersten Rollenreihe 62 und der zweiten Rollenreihe 63 des weiteren Richtwerks 60 bereitgestellt und von deren Rollen gehalten. Der Messrollenantrieb 65 der Messeinrichtung 66 zum Bestimmen des Leitungsdurchmessers der Leitung 11 ist mit Steuerungseinrichtung 350 zum Austausch von Messdaten verbunden. Der Zustellantrieb 67 und der Schwenkantrieb 68 des weiteren Richtwerks 60 sind zum Empfang von Steuerbefehlen mit der Steuerungseinrichtung 250 verbunden. Die beschriebene Richtvorrichtung 315 gemäss Fig. 6 umfasst eine Überwachungseinrichtung 100 zum Überwachen der Begradigung der Leitung 11, wie bereits in der Fig. 1 und der Fig. 2 beschrieben.

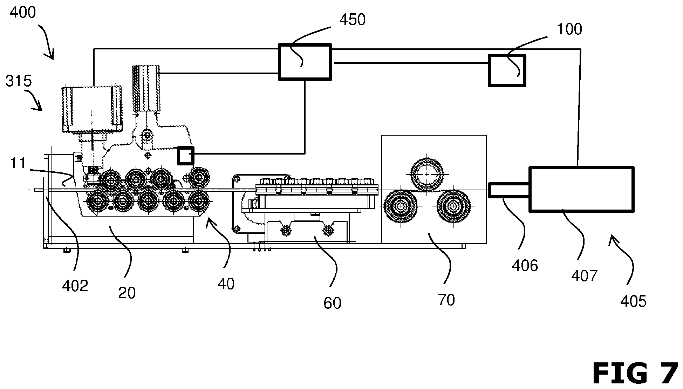

Fig. 7 zeigt eine erfindungsgemässe Kabelverarbeitungsmaschine 400 in einer Seitenansicht mit einer Richtvorrichtung 315 gemäss Fig. 6. Bei der nachfolgenden Beschreibung wird bei gleichen Bauteilen auf die Figuren 1 bis 6 Bezug genommen. Die Kabelverarbeitungsmaschine 400 weist eine Leitungszuführung 402 und eine Leitungsfördereinrichtung 405 auf, wobei die Leitungsfördereinrichtung 405 die zu begradigende Leitung 11 durch das eine Richtwerk 20, durch das weitere Richtwerk 60 und durch die Zugkraftmessung 70 fördert. Die Leitungsfördereinrichtung 405 weist ein Führungsröhrchen 406 zum Führen der Leitung 11 auf und weist einen Förderantrieb 407 zum Fördern der Leitung 11 durch die Kabelverarbeitungsmaschine 400 auf. Der Förderantrieb 207 ist mit der Steuerungseinrichtung 450 verbunden. Die Steuerungseinrichtung 450 erstellt, wie zuvor vorliegend beschrieben, Steuerbefehle auf Basis der Messdaten der Messeinrichtung 40 zum Bestimmen des Leitungsdurchmessers und/oder auf Basis der Messdaten der Zugkraftmessung 70 zum Bestimmen der Leitungszugkraft. Mit diesen Steuerbefehlen wird die Fördergeschwindigkeit der Leitung 11 durch die Richtvorrichtung 315 gesteuert, sodass eine hinreichend begradigte Leitung erstellt wird.

Diese in den Fig. 1 bis Fig. 7 beschriebenen Schritte werden gegebenenfalls in einem computerimplementierten Verfahren zum automatischen Bestimmen und Erzeugen von Datensätzen und/oder Steuerbefehlen zum Steuern der hier vorliegend beschriebenen Richtvorrichtung und/oder den hier beschriebenen Kabelverarbeitungsmaschinen angewendet, welche ein hier beschriebenes Verfahren zum Begradigen oder Einstellen der Leitung 11 ausführt. Die Datensätze und/oder Steuerbefehle werden in einem Computerprogrammprodukt hinterlegt und in einem computerlesbaren Medium gespeichert.

### Bezugszeichenliste

- 11: Leitung
- 12: Leitungsachse
- 15: Richtvorrichtung
- 20: ein Richtwerk
- 21: ersten Rollenreihe
- 22: Basis
- 23: erster Träger
- 24: Rollen von 21
- 25: Rollenachse von 21
- 26: Vorsprung
- 27: Zustellantrieb
- 28: Schwenkantrieb
- 29: Einstellspindel
- 31: zweiten Rollenreihe
- 33: zweiter Träger
- 34: Rollen von 31
- 35: Rollenachse von 31
- 36: Aussparung
- 40: Messeinrichtung
- 41: eine Messrolle
- 42: Messrollenantrieb
- 43: Andruckrolle
- 50: Steuerungseinrichtung
- 52: Recheneinheit
- 54: Speichereinheit
- 59: Datenbank
- 60: weiteres Richtwerk
- 62: erste Rollenreihe von 60
- 63: zweite Rollenreihe von 60
- 65: Messrollenantrieb
- 66: Messeinrichtung
- 67: Zustellantrieb
- 68: Schwenkantrieb
- 70: Zugkraftmessung
- 74: Rollengruppe
- 75: Stütze
- 80: erste Stützrollen
- 81: zweite Stützrollen
- 85: Pressrolle
- 87: Pressrollenantrieb
- 90: Sensoreinrichtung
- 100: Überwachungseinrichtung
- 101: Kamera
- 102: zweite Kamera

- 115: Richtvorrichtung
- 150: Steuerungseinrichtung
- 152: Recheneinheit
- 154: Speichereinheit
- 159: Datenbank

- 215: Richtvorrichtung
- 250: Steuerungseinrichtung
- 252: Recheneinheit
- 254: Speichereinheit
- 259: Datenbank

- 315: Richtvorrichtung
- 350: Steuerungseinrichtung

- 400: Kabelverarbeitungsmaschine
- 402: Leitungszuführung
- 405: Leitungsfördereinrichtung
- 406: Führungsröhrchen
- 407: Förderantrieb
- 450: Steuerungseinrichtung

- A: Abstand zwischen 41 und 43
- D: Abstand zwischen 80 bzw. 81 und 85
- β: Winkel zwischen 25 und 35

## Patentansprüche

1. Richtvorrichtung (15; 115; 215; 315) zum Begradigen einer elektrischen oder optischen Leitung (11), umfassend ein Richtwerk (20), mit einer ersten Rollenreihe (21) und einer zweiten Rollenreihe (31) die relativ zueinander bewegbar sind, wobei die Richtvorrichtung (15; 115; 215; 315) eine Messeinrichtung (40) zum Bestimmen eines Leitungsdurchmessers aufweist, wobei die Messeinrichtung (40) bevorzugt am Richtwerk (20) angeordnet ist, wobei die Richtvorrichtung (15; 115; 215; 315) eine Steuerungseinrichtung (50; 150; 250; 350; 450) aufweist, wobei das Richtwerk (20) einen Zustellantrieb (27) aufweist, mit welchem die erste Rollenreihe (21) relativ zur zweiten Rollenreihe (31) zustellbar ist;
**dadurch gekennzeichnet, dass** die Richtvorrichtung (15; 115; 215; 315) eine Zugkraftmesseinrichtung (70) zum Bestimmen einer auf die Leitung (11) wirkenden Leitungszugkraft aufweist, und dass das Richtwerk (20) einen Schwenkantrieb (28) zum Einstellen eines Winkels zwischen einer Rollenachse (25) der ersten Rollenreihe (21) und einer Rollenachse (35) der zweiten Rollenreihe (31) aufweist.

2. Richtvorrichtung (15; 115; 215; 315) nach Anspruch 1, **dadurch gekennzeichnet, dass** die Messeinrichtung (40) zum Bestimmen des Leitungsdurchmessers als Ultraschallsensor oder als Lasersensor, insbesondere als ein Laservorhang ausgebildet ist.

3. Richtvorrichtung (15; 115; 215; 315) nach Anspruch 1, **dadurch gekennzeichnet, dass** die Messeinrichtung (40) zumindest eine Messrolle (41) und eine der Messrolle (41) gegenüberliegend angeordnete Andruckrolle (43) aufweist, die derart angeordnet sind, dass die Leitung zwischen der Messrolle (41) und der Andruckrolle (43) durchführbar ist, wobei ein Abstand (A) zwischen der Messrolle (41) und der Andruckrolle (43) mit einem Messrollenantrieb (42) zum Bewegen der Messrolle (41) verstellbar ist.

4. Richtvorrichtung (15; 115; 215; 315) nach Anspruch 3, **dadurch gekennzeichnet, dass** die Messeinrichtung (40) zum Bestimmen des Leitungsdurchmessers zumindest einen Sensor aus der folgenden Gruppe aufweist: Wegsensor, Positionssensor, Distanzsensor, Winkelmesser.

5. Richtvorrichtung (15; 115; 215; 315) nach Anspruch 3 oder 4, **dadurch gekennzeichnet, dass** die Andruckrolle (43) an der zweiten Rollenreihe (31) angeordnet ist, insbesondere die zweite Rollenreihe (31) mehrere Rollen (34) aufweist, wobei die Andruckrolle (43) als eine der mehreren Rollen (34) ausgebildet ist.

6. Richtvorrichtung (15; 115; 215; 315) nach einem der Ansprüche 1 bis 5, **dadurch gekennzeichnet, dass** die Steuerungseinrichtung (50; 150; 250; 350; 450) bevorzugt eine Recheneinheit (52; 152; 252) und eine Speichereinheit (54; 154; 254) aufweist und insbesondere mit einer Datenbank (59) verbunden ist.

7. Richtvorrichtung (15; 115; 215; 315) nach Anspruch 6, **dadurch gekennzeichnet, dass** die Messeinrichtung (40) mit der Steuerungseinrichtung (50; 150; 250; 350; 450) zum Übermitteln von Messdaten, insbesondere zum Übermitteln des Leitungsdurchmessers oder eines entsprechenden Wertes, verbunden ist und die Steuerungseinrichtung (50; 150; 250; 350; 450) bevorzugt mit dem Messrollenantrieb (42) verbunden ist.

8. Verfahren zum Betreiben eines Richtwerks (20) in einer Richtvorrichtung (15; 115; 215; 315) nach einem der Ansprüche 1 bis 7, wobei das Verfahren folgende Schritte umfasst:
- Bereitstellen einer elektrischen oder optischen Leitung (11) zwischer einer ersten Rollenreihe (21) und einer zweiten Rollenreihe (31) in einem Richtwerk (20);
- Bestimmen des Leitungsdurchmessers der Leitung (11) mithilfe einer Messeinrichtung (40);
- Berechnen eines Sollwertes zum Zustellen der ersten Rollenreihe (21) relativ zur zweiten Rollenreihe (31) anhand des bestimmten Leitungsdurchmessers;
- Zustellen der ersten Rollenreihe (21) relativ zu der zweiten Rollenreihe (31) entsprechend des Sollwertes.

9. Verfahren nach Anspruch 8, wobei die Schritte
- Bestimmen des Leitungsdurchmessers der Leitung mithilfe einer Messeinrichtung (40);
- Berechnen eines Sollwertes zum Zustellen der ersten Rollenreihe (21) relativ zur zweiten Rollenreihe (31) anhand des bestimmten Leitungsdurchmessers; und
- Zustellen der ersten Rollenreihe (21) relativ zu der zweiten Rollenreihe (31) entsprechend des Sollwertes wiederholt werden, insbesondere kontinuierlich ausgeführt werden.

10. Verfahren nach Anspruch 8 oder 9 **dadurch gekennzeichnet, dass** zur Berechnung des Sollwertes im Richtwerk (20) ein leitungsspezifischer Parameter berücksichtigt wird.

11. Verfahren nach einem der Ansprüche 8 bis 10, **dadurch gekennzeichnet, dass** nach dem Zustellen der ersten Rollenreihe (21) relativ zu der zweiten Rollenreihe (31), die erste Rollenreihe (21) relativ zu der zweiten Rollenreihe (31) zum Entspannen der Leitung (11) geöffnet wird.

12. Richtvorrichtung (15; 115; 215; 315) nach einem der Ansprüche 1 bis 7, umfassend eine Überwachungseinrichtung (100) zum Überwachen der Begradigung der Leitung (11), wobei die Überwachungseinrichtung (100) insbesondere eine optische, eine akustische oder eine luftstromtechnische Überwachungseinrichtung (100) ist.

13. Kabelverarbeitungsmaschine (400) umfassend eine Richtvorrichtung (15; 115; 215; 315) nach einem der Ansprüche 1 bis 7 sowie ein weiteres Richtwerk (60), wobei das weitere Richtwerk (60), bevorzugt im Wesentlichen um 90° verdreht zum jeweiligen Richtwerk (20) angeordnet ist.

14. Kabelverarbeitungsmaschine (400) nach Anspruch 13, **dadurch gekennzeichnet, dass** die Kabelverarbeitungsmaschine (400) eine Leitungsfördereinrichtung (405) aufweist.

## Claims

1. A straightening device (15; 115; 215; 315) for straightening an electrical or optical line (11), including a straightening assembly (20) with a first roller row (21) and a second roller row (31) that can be moved relative to each other, wherein the straightening device (15; 115; 215; 315) includes a measurement unit (40) for determining a line diameter, wherein the measurement unit (40) is preferably arranged on the straightening assembly (20), wherein the straightening device (15; 115; 215; 315) includes a control unit (50; 150, 250; 350; 450), wherein the straightening assembly (20) includes a positioning drive (27) with which the first roller row (21) can be positioned relative to the second roller row (31);
**characterised in that** the straightening device (15; 115; 215; 315) has a tensile-force measurement unit (70) for determining a tensile force acting on the line (11), and the straightening assembly (20) includes a rotary drive (28) for setting an angle between a roller axis (25) of the first roller row (21) and a roller axis (35) of the second roller row (31).

2. A straightening device (15; 115; 215; 315) according to claim 1, **characterised in that** the measurement unit (40) for determining the line diameter takes the form of an ultrasonic sensor or a laser sensor, in particular a laser curtain.

3. A straightening device (15; 115; 215; 315) according to claim 1, **characterised in that** the measurement unit (40) includes at least one measurement roller (41) and one pinch roller (43) arranged opposite the measurement roller (41), which are arranged in such a manner that the line can be conducted between the measurement roller (41) and the pinch roller (43), wherein a distance (A) between the measurement roller (41) and the pinch roller (43) can be adjusted by means of a measurement-roller drive (42) for moving the measurement roller (41).

4. A straightening device (15; 115; 215; 315) according to claim 3, **characterised in that** the measurement unit (40) for determining the line diameter includes at least one sensor from the following group: travel sensor, position sensor, distance sensor, goniometer.

5. A straightening device (15; 115; 215; 315) according to claim 3 or 4, **characterised in that** the pinch roller (43) is arranged in the second roller row (31), which second roller row (31) in particular includes a plurality of rollers (34), wherein the pinch roller (43) takes the form of one of the plurality of rollers (34) .

6. A straightening device (15; 115; 215; 315) according to one of claims 1 to 5, **characterised in that** the control unit (50; 150; 250; 350; 450) preferably includes a computing unit (52; 152; 252) and a memory unit (54; 154; 254) and is in particular connected to a database (59).

7. A straightening device (15; 115; 215; 315) according to claim 6, **characterised in that** the measurement unit (40) is connected to the control unit (50; 150; 250; 350; 450) to communicate measurement data, in particular to communicate the line diameter or a corresponding value, and the control unit (50; 150; 250; 350; 450) is preferably connected to the measurement-roller drive (42).

8. A method for operating a straightening assembly (20) in a straightening device (15; 115; 215; 315) according to one of claims 1 to 7, wherein the method includes the following steps:
- providing an electrical or optical line (11) between a first roller row (21) and a second roller row (31) in a straightening assembly (20);
- determining the line diameter of the line (11) by means of a measurement unit (40);
- calculating a target value for positioning the first roller row (21) relative to the second roller row (31) on the basis of the determined line diameter;
- positioning the first roller row (21) relative to the second roller row (31) according to the target value.

9. A method according to claim 8, wherein the steps
- determining the line diameter of the line by means of a measurement unit (40);
- calculating a target value for positioning the first roller row (21) relative to the second roller row (31) based on the determined line diameter; and
- positioning the first roller row (21) relative to the second roller row (31) according to the target value are repeated and are in particular carried out continuously.

10. A method according to claim 8 or 9, **characterised in that** a line-specific parameter is taken into account for the calculation of the target value in the straightening assembly (20).

11. A method according to one of claims 8 to 10, **characterised in that**, after the positioning of the first roller row (21) relative to the second roller row (31), the first roller row (21) is loosened relative to the second roller row (31) to lessen the tension in the line (11).

12. A straightening device (15; 115; 215; 315) according to one of claims 1 to 7, including a monitoring unit (100) for monitoring the straightening of the line (11), wherein the monitoring unit (100) is in particular a monitoring unit (100) based on optics, acoustics or airflow.

13. A cable-processing machine (400) including a straightening device (15; 115; 215; 315) according to one of claims 1 to 7 as well as a further straightening assembly (60), wherein the further straightening assembly (60) is preferably arranged so as to be pivoted essentially by 90° relative to the existing straightening assembly (20).

14. A cable-processing machine (400) according to claim 13, **characterised in that** the cable-processing machine (400) includes a line conveying unit (405).

## Revendications

1. Dispositif de redressage (15, 115, 215, 315) pour la rectification d'un conducteur électrique ou optique (11) comprenant un mécanisme de redressage (20), avec une première rangée de galets (21) et une deuxième rangée de galets (31), qui sont mobiles l'une par rapport à l'autre,
sachant que le dispositif de redressage (15, 115, 215, 315) comporte un dispositif de mesure (40) pour déterminer un diamètre de conducteur,
sachant que le dispositif de mesure (40) est disposé de préférence sur le mécanisme de redressage (20), sachant que le dispositif de redressage (15, 115, 215, 315) comporte un système de commande (50, 150, 250, 350, 450),
sachant que le mécanisme de redressage (20) comporte un entraînement d'approche (27) avec lequel la première rangée de galets (21) peut être avancée par rapport à la deuxième rangée de galets (31),
**caractérisé en ce que** le dispositif de redressage (15, 115, 215, 315) comporte un dispositif de mesure de force de traction (70) pour déterminer une force de traction de conducteur agissant sur le conducteur (11), et
**en ce que** le mécanisme de redressage (20) comporte un entraînement pivotant (28) pour régler un angle entre un axe de galet (25) de la première rangée de galets (21) et un axe de galet (35) de la deuxième rangée de galets (31).

2. Dispositif de redressage (15, 115, 215, 315) selon la revendication 1, **caractérisé en ce que** le dispositif de mesure (40) est constitué pour déterminer le diamètre de conducteur sous la forme d'un capteur à ultrasons ou sous la forme d'un capteur à laser, en particulier sous la forme d'un rideau laser.

3. Dispositif de redressage (15, 115, 215, 315) selon la revendication 1, **caractérisé en ce que** le dispositif de mesure (40) comporte au moins un galet de mesure (41) et un galet de pression (43) disposé opposé au galet de mesure (41), qui sont disposés de telle manière que le conducteur peut être passé entre le galet de mesure (41) et le galet de pression (43), sachant qu'un intervalle (A) peut être réglé entre le galet de mesure (41) et le galet de pression (43) avec un entraînement de galet de mesure (42) pour déplacer le galets de mesure (41).

4. Dispositif de redressage (15, 115, 215, 315) selon la revendication 3, **caractérisé en ce que** le dispositif de mesure (40) comporte au moins un capteur appartenant au groupe suivant : capteur de course, capteur de position, capteur de distance, mesureur d'angle, pour déterminer le diamètre de conducteur.

5. Dispositif de redressage (15, 115, 215, 315) selon la revendication 3 ou 4, **caractérisé en ce que** le galet de pression (43) est disposé sur la deuxième rangée de galets (31), la deuxième rangée de galets (31) comporte en particulier plusieurs galets (34), sachant que le galet de pression (43) est constitué en tant qu'un des nombreux galets (34).

6. Dispositif de redressage (15, 115, 215, 315) selon l'une quelconque des revendications 1 à 5, **caractérisé en ce que** le système de commande (50, 150, 250, 350, 450) comporte de préférence une unité de calcul (52, 152, 252) et une unité de mémorisation (54, 154, 254) et est en particulier relié à une banque de données (59).

7. Dispositif de redressage (15, 115, 215, 315) selon la revendication 6, **caractérisé en ce que** le dispositif de mesure (40) est relié au système de commande (50, 150, 250, 350, 450) pour la transmission des données de mesure, en particulier pour la transmission du diamètre de conducteur ou d'une valeur correspondante et le système de commande (50, 150, 250, 350, 450) est relié de préférence à l'entraînement du galet de mesure (42).

8. Procédé de fonctionnement d'un mécanisme de redressage (20) dans un dispositif de redressage (15, 115, 215, 315) selon l'une quelconque des revendications 1 à 7, sachant que le procédé comprend les étapes suivantes :
- mise à disposition d'un conducteur électrique ou optique (11) entre une première rangée de galets (21) et une deuxième rangée de galets (31) dans un mécanisme de redressage (20),
- détermination du diamètre de conducteur (11) à l'aide d'un dispositif de mesure (40),
- calcul d'une valeur théorique pour l'approche de la première rangée de galets (21) par rapport à la deuxième rangée de galets (31) au moyen du diamètre de conducteur déterminé,
- approche de la première rangée de galets (21) par rapport à la deuxième rangée de galets (31) selon la valeur théorique.

9. Procédé selon la revendication 8, sachant que les étapes de
- détermination du diamètre de conducteur à l'aide d'un dispositif de mesure (40),
- calcul d'une valeur théorique pour l'approche de la première rangée de galets (21) par rapport à la deuxième rangée de galets (31) au moyen du diamètre de conducteur déterminé, et
- approche de la première rangée de galets (21) par rapport à la deuxième rangée de galets (31) selon la valeur théorique,
sont répétées, sont en particulier exécutées en continu.

10. Procédé selon la revendication 8 ou 9, **caractérisé en ce qu'**un paramètre spécifique au conducteur est pris en considération pour le calcul de la valeur théorique dans le mécanisme de redressage (20).

11. Procédé selon l'une quelconque des revendications 8 à 10, **caractérisée en ce qu'**après l'approche de la première rangée de galets (21) par rapport à la deuxième rangée de galets (31), la première rangée de galets (21) est ouverte par rapport à la deuxième rangée de galets (31) pour détendre le conducteur (11).

12. Dispositif de redressage (15, 115, 215, 315) selon l'une quelconque des revendications 1 à 7, comprenant un dispositif de contrôle (100) pour surveiller la rectification du conducteur (11), sachant que le dispositif de contrôle (100) est en particulier un dispositif de contrôle (100) optique, acoustique ou relevant de la technique d'écoulement d'air.

13. Machine à traiter les câbles (400) comprenant un dispositif de redressage (15, 115, 215, 315) l'une quelconque des revendications 1 à 7 ainsi qu'un autre mécanisme de redressage (60), sachant que l'autre mécanisme de redressage (60) est disposé de préférence pour l'essentiel tourné de 90° par rapport au mécanisme de redressage (20) respectif.

14. Machine à traiter les câbles (400) selon la revendication 13, **caractérisée en ce que** la machine à traiter les câbles (400) comporte un système de transport de conducteurs (405).
